# EUROPÄISCHE PATENTSCHRIFT

(11) **EP 1 328 711 B1**
(45) Veröffentlichungstag und Bekanntmachung des Hinweises auf die Patenterteilung: **09.06.2004**
(21) Anmeldenummer: 01987840.4
(22) Anmeldetag: 18.10.2001
(51) Int. Cl.: F01N 3/20, F01N 3/08, B01D 53/94, F01N 3/28

(54) **BEHEIZBARER WABENKÖRPER MIT ZWEI VERSCHIEDENEN BESCHICHTUNGEN**
HEATABLE HONEYCOMB BODY WITH TWO DIFFERENT COATINGS
CORPS EN NID D'ABEILLES CHAUFFE PRESENTANT DEUX REVETEMENTS DIFFERENTS

(30) Priorität: 18.10.2000 DE 10051562
(43) Veröffentlichungstag der Anmeldung: 23.07.2003
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Kahlhöfer, Hermann, Dipl.-Phys.
(86) Internationale Anmeldenummer: PCT/EP2001/012064
(87) Internationale Veröffentlichungsnummer: WO 2002/033229

(56) Entgegenhaltungen:
- EP-A- 0 485 179
- EP-A- 0 661 098
- DE-A- 4 339 025
- DE-A- 4 339 424
- US-A- 5 146 743
- US-A- 5 465 573
- US-A- 5 480 621
- US-A- 5 538 698
- US-A- 5 914 090
- US-A- 6 025 578
- US-A- 6 113 864

## Beschreibung

Die Erfindung bezieht sich auf einen elektrisch beheizbaren Wabenkörper, insbesondere zur Reinigung eines Abgases einer Verbrennungskraftmaschine gemäß dem Oberbegriff des Anspruchs 1. Derartige elektrisch beheizbare Wabenkörper werden insbesondere zur Verringerung des Schadstoffausstoßes in der Kaltstartphase einer Verbrennungskraftmaschine eingesetzt, wie beispielsweise bei einem Motor eines Kraftfahrzeuges.

Eine metallische Ausführungsform eines elektrisch beheizbaren Wabenkörpers ist beispielsweise aus der EP 0 541 585 B1 bekannt Insbesondere zeigt diese Schrift Ausführungsbeispiele mit S-förmig verschlungenen Blechstapeln, bei denen die elektrische Kontaktierung über äußere Halbschalen erfolgt. Die mechanische Stabilität bei hohen Betriebsbelastungen gewährleisten dabei durchgehende metallische Tragstrukturen, welche in das Innere des Wabenkörpers ragen. Durch geeignete Dimensionierung der Tragstrukturen und entsprechend gewählte Kontaktierungen mit den Blechstapeln gleichzeitig eine gleichmäßige Verteilung des elektrischen Stromes in dem Wabenkörper im Falle des Anlegens einer Spannung erreicht. Weiterhin ist aus dieser Schrift bekannt, den elektrisch beheizberen Wabenkörper mit einer katalytisch aktiven Beschichtung zu versehen, wobei diese unter Berücksichtigung seines Einsatzes während der Kaltstartphase bevorzugt eine hauptsächlich oxidierend wirkende Beschichtung aufweist, beispielsweise eine Bedampfung mit Platin und/oder Rhodium.

Eine keramische Ausführungsform eines elektrisch beheizbaren Wabenkörpers ist beispielsweise in der EP 0 485 179 B1 beschrieben. Der dort beschriebene Wabenkörper ist für ein zu erwärmendes Gas durchströmbar und umfaßt mindestens zwei Elektroden zum Durchfluß von elektrischem Strom, um den Wabenkörper zu erwärmen. In diesem Dokument wird vorgeschlagen, den elektrisch beheizbaren Wabenkörper mit einer Zusammensetzung aus einem Adsorbermaterial und einem katalytisch aktiven Material zu beschichten. Das Adsorbermaterial soll die während der Kaltstartphase erzeugten, nicht vollständig verbrannten Kohlenwasserstoffe fangen, bis die katalytisch aktive Beschichtung mit dem elektrisch beheizbaren Wabenkörper auf eine Temperatur erwärmt ist, bei der eine chemische Umsetzung von diesen Kohlenwasserstoffen möglich ist.

Davon ausgehend ist die Aufgabe der vorliegenden Erfindung, einen elektrisch beheizbaren Wabenkörper anzugeben, welcher eine an das Anspringverhalten des elektrisch beheizbaren Wabenkörpers angepaßte Beschichtung aufweist, um eine effektive Verringerung des Schadstoffausstoßes in der Kaltstartphase einer Verbrennungskraftmaschine zu gewährleisten.

Diese Aufgabe wird durch einen elektrisch beheizbaren Wabenkörper gemäß den Merkmalen des Anspruchs 1 gelöst Vorteilhafte Ausführungsformen und Ausgestaltungen sind in den abhängigen Ansprüchen angegeben.

Der erfindungsgemäße elektrisch beheizbare Wabenkörper weist mindestens zwei in Strömungsrichtung hintereinander angeordnete Zonen auf und dient insbesondere der Reinigung eines Abgases einer Verbrennungskraftmaschine. Der elektrisch beheizbare Wabenkörper zeichnet sich dadurch aus, daß die mindestens zwei Zonen jeweils verschiedene Beschichtungen aufweisen. Die verschiedenen Beschichtungen haben insbesondere während der Kaltstartphase einer Verbrennungskraftmaschine unterschiedliche Funktionen. Die Funktionen der Beschichtungen sind beispielsweise das Adsorbieren von Schadstoffen, die katalytische Umsetzung von Schadstoffen oder das Oxidieren von Abgasbestandteilen. Während bei den bekannten elektrisch beheizbaren Wabenkörpern stets versucht wurde, diese unterschiedlichen Funktionen in einer Beschichtungs-Zusammensetzung zu vereinen, wird hier erfindungsgemäß vorgeschlagen, die Beschichtungen entsprechend ihrer Funktionen räumlich voneinander zu trennen. Dies ist besonders vorteilhaft, da sich derartig angeordnete Beschichtungen gegenseitig nicht negativ beeinflussen. Insbesondere während der Kaltstartphase kommen Beschichtungen zum Einsatz, deren Funktionen im wesentlichen von der Temperatur beeinflußt sind. Bei der Interaktion von Beschichtung und Abgas laufen teilweise exotherme Reaktionen ab, die das Anspringverhalten bzw. Erwärmen des Wabenkörpers und somit auch gegebenenfalls das Reaktionsverhalten anderer Beschichtungen beeinflussen. Die Anordnung von verschiedenen Beschichtungen in in Strömungsrichtung hintereinander liegenden Zonen vermeidet derartig ungewünschte Effekte.

Gemäß einer weiteren Ausgestaltung des elektrisch beheizbaren Wabenkörpers weist die erste Zone eine Beschichtung mit Adsorbermaterial und die zweite Zone eine katalytisch aktive Beschichtung auf. Bei der Reinigung eines Abgases mit einer solchen Kombination von elektrisch beheizbarem Wabenkörper mit einer ersten Beschichtung mit Adsorbermaterial und einer zweiten katalytisch aktiven Beschichtung ereignen sich insbesondere während der Anspringphase des Wabenkörpers eine Vielzahl von chemischen Reaktionen, die zumindest teilweise sehr komplex miteinander interagieren. Diese Wechselbeziehungen werden nachfolgend beschrieben, wobei die Vorteile einer räumlich getrennten Anordnung der verschiedenen Beschichtungen herausgestellt wird.

Zur Umsetzung von Schadstoffen in einem Abgas werden katalytisch aktive Oberflächen bzw. Beschichtungen eingesetzt, die ab einer bestimmten Temperatur (ca. 250°C) eine chemische Umsetzung der Schadstoffe (Kohlenmonoxid, Kohlenwasserstoff, Stickoxid) bewirkt Der Zeitraum bis zum Erreichen dieser Anspringtemperatur wird durch den Einsatz eines elektrisch beheizbaren Wabenkörpers verkürzt. Somit erfolgt eine Erwärmung der katalytisch aktiven Oberfläche bzw. Beschichtung nicht ausschließlich aufgrund des heißen Abgases aus einem Verbrennungsvorgang, sondern wird zusätzlich durch die Widerstandswärme unterstützt. Zur Erfüllung der weltweit schärfer werdenden Abgasgrenzwerte ist es jedoch erforderlich, daß auch direkt nach dem Kaltstart nur eine sehr geringe Kohlenwasserstoff-Emission erfolgt. Hierfür eignet sich der Einsatz eines Adsorbermaterials, das die Aufgabe übernimmt, im Kaltstart anfallende Kohlenwasserstoff-Moleküle zu speichern.

Ein derartiges Adsorbermaterial zeichnet sich während einer Temperaturerhöhung durch zwei verschiedene Phasen aus: eine Adsorptionsphase und eine Desorptionsphase. Direkt nach dem Kaltstart der Verbrennungskraftmaschine werden beispielsweise die Kohlenwasserstoffe in einer zumeist sehr zerklüfteten Oberflächenstruktur des Adsorbermaterials aufgenommen. Die Stärke der Anbindung der Kohlenwasserstoffe an das Adsorbermaterial hängt von der Art der Moleküle und der Struktur des Adsorbermaterials ab (Adsorptionsphase). Mit steigender Abgasund/oder Wabenkörpertemperatur werden die in dem Adsorbermaterial gespeicherten Kohlenwasserstoffe desorbiert (Desorptionsphase). Dies geschieht insbesondere bei Temperaturen zwischen 100°C bis 200°C. Daraus läßt sich erkennen, daß das Adsorbermaterial bereits bei Temperaturen desorbiert, bei denen eine vollständige katalytische Umsetzung der desorbierten Kohlenwasserstoffe nicht gewährleistet ist.

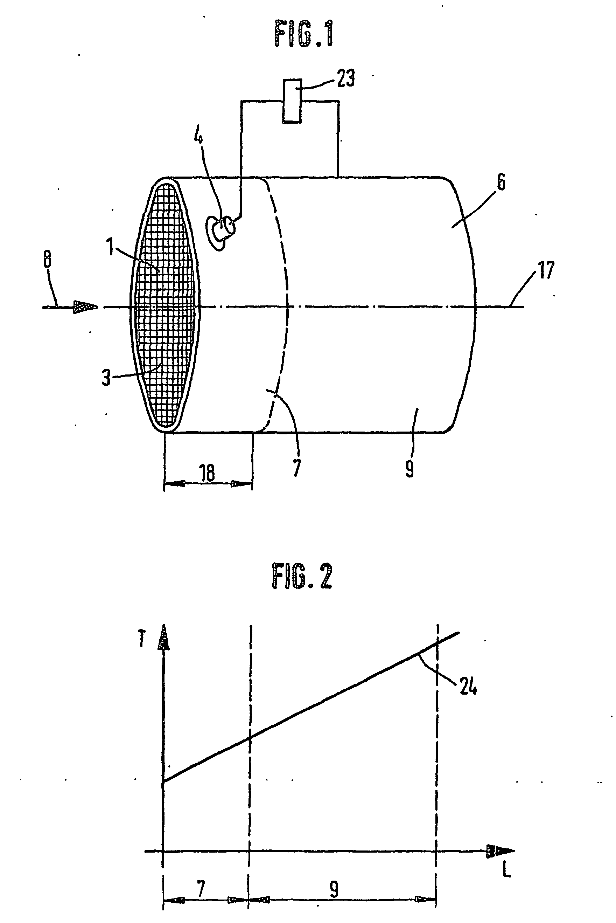

Untersuchungen bezüglich des Anspringverhaltens eines elektrisch beheizbaren und von einem Abgas durchströmten Wabenkörpers haben gezeigt, daß während der Kaltstartphase über die axiale Länge des Wabenkörpers ein in Strömungsrichtung im wesentlichen ansteigender Temperaturverlauf ausgebildet wird (siehe auch Figur 2). Dies hat zur Folge, daß der elektrisch beheizbare Wabenkörper während der Kaltstartphase eine erste Zone mit niedrigeren Temperaturen aufweist, als eine stromabwärts angeordnete zweite Zone. Erfindungsgemäß ist vorgeschlagen, die erste, kühlere Zone mit einem Adsorbermaterial zu beschichten und die zweite, heißere Zone mit einer katalytisch aktiven Beschichtung zu versehen. Diese besonders bevorzugte Anordnung hat den Vorteil, daß die beiden Beschichtungen zum gleichen Zeitpunkt der Kaltstartphase unterschiedliche Temperaturen aufweisen, wobei bei der stromabwärts angeordneten, katalytisch aktiven Beschichtung bereits eine geeignete Temperatur für eine katalytische Umsetzung bereitgestellt werden kann, bevor das Adsorbermaterial in der kühleren ersten Zone seine Desorptionsphase erreicht Auf diese Weise ist ein besonders effektiver beheizbarer Wabenkörper geschaffen, der insbesondere während einer Kaltstartphase der Verbrennungskraftmaschine eine Schadstoff-Emission in die Umgebung verhindert.

Gemäß einer weiteren Ausgestaltung des elektrisch beheizbaren Wabenkörpers ist die Beschichtung mit Adsorbermaterial mit einer Zeolithstruktur ausgeführt. Zeolithe sind mikroporöse Alumosilikate (Aluminium-Silizium-Kristalle) mit der Eigenschaft, bestimmte Moleküle aufnehmen zu können. Die Zeolithstruktur besteht aus einem Tetraedergerüst mit Kanälen und/oder Hohlräumen, deren Geometrie einen Zeolithen charakterisiert. Die Zeolithstruktur ist aufgrund ihres Aufbaus besonders für eine Anbindung von Kohlenwasserstoffen geeignet.

Gemäß noch einer weiteren Ausgestaltung weist der elektrisch beheizbare Wabenkörper Blechlagen auf, die zumindest teilweise so strukturiert sind, daß diese für ein Abgas durchströmbar sind. Ein elektrisch beheizbarer Wabenkörper mit Blechlagen hat den Vorteil, daß dieser bei gleichem Volumen eine größere Oberfläche zur Adsorption bzw. katalytischen Umsetzung der Schadstoffe sowie einen geringeren Druckverlust gegenüber beispielsweise einem keramischen Wabenkörper aufweist.

Besonders vorteilhaft ist es dabei, daß die Blechlagen mit Blechen ausgeführt sind, die eine Dicke von kleiner 0,08 mm haben. Diese relativ dünnen Bleche gewährleisten eine geringe Wärmekapazität, wodurch dem Abgas nur eine sehr geringe thermische Energie entzogen wird. Vorzugsweise weisen die Bleche eine Dicke von kleiner 0,04 mm, insbesondere kleiner 0,02 mm, auf

Gemäß noch einer weiteren Ausgestaltung hat der Wabenkörper für ein Abgas durchströmbare Kanäle, wobei die Anzahl von Kanälen größer 400 cpsi ("cells per square inch"), insbesondere größer 600 cpsi ist. Eine hohe Anzahl von Kanälen stellt bei gleichem Volumen eine große Oberfläche zur Verfügung, wodurch beispielsweise die Adsorptionskapazität der Beschichtung mit Adsorbermaterial bzw. die katalytische Umsetzung der Schadstoffe verbessert wird.

Gemäß einer weiteren Ausgestaltung des elektrisch beheizbaren Wabenkörpers hat die erste Zone eine axiale erste Länge von kleiner 20 mm. Aufgrund des rasehen Erreichens der Anspringtemperatur für eine katalytische Umsetzung der Schadstoffe im Abgas durch die Beschichtung in der zweiten Zone müssen die Schadstoffe nur über einen sehr kurzen Zeitraum gespeichert werden. Demzufolge wird nur eine relativ schmale Scheibe mit einer Beschichtung mit Adsorbermaterial benötigt. Eine erste Zone mit Adsorbermaterial mit einer axialen Länge von maximal 20 mm stellt eine ausreichende Adsorptionskapazität zur Verfügung, um zu gewährleisten, daß eine Schadstoff-Emission in die Umgebung verhindert wird.

Gemäß einem weiteren Aspekt der Erfindung wird ein Trägerkörper mit einem erfindungsgemäß beheizbaren Wabenkörper vorgeschlagen, wobei der Wabenkörper elektrisch isolierende Schichten aufweist und mit mindestens einer Elektrode derart elektrisch leitend verbunden ist, daß ein vorgebbarer Strompfad gebildet ist, wobei der Wabenkörper von einem Mantelrohr zumindest teilweise umschlossen ist. Das den Wabenkörper umschließende Mantelrohr gewährleistet insbesondere im Hinblick auf die im Abgasstrom auftretenden Druckschwankungen eine dauerhafte Stabilität und Integration des Wabenkörpers in einem Abgassystem Mit Hilfe der elektrisch isolierenden Schichten wird bei Anlegung einer Spannung an die Elektrode ein Strompfad gebildet, der eine gleichmäßige Erwärmung des Wabenkörpers über seinen Querschnitt gewährleistet.

Dazu wird weiterhin vorgeschlagen, daß die mindestens eine Elektrode elektrisch isoliert durch das Mantelrohr geführt ist. Zwar ist es prinzipiell auch bei der vorliegenden Erfindung möglich, das Mantelrohr mit einer der Elektroden leitend zu verbinden, jedoch ist es für eine größere Freiheit bei der späteren Einbindung in ein elektrisches Versorgungssystem besonders vorteilhaft, wenn keine elektrische Verbindung zum Mantelrohr besteht. Dieses dient dann nur als Schutzhülle und tragendes Verbindungselement beispielsweise zu den übrigen Teilen eines Abgassystems bei einem Kraftfahrzeug.

Gemäß einer weiteren Ausgestaltung des Trägerkörpers sind die elektrisch isolierenden Schichten zumindest teilweise Luftspalte. Die Spalte sind dabei so zu dimensionieren, daß eine elektrische Isolierung auch bei auftretenden Druckstößen im Abgassystem und Erschütterungen durch Fahrzeugbewegungen gewährleistet ist.

Besonders vorteilhaft ist es dabei, daß die elektrisch isolierenden Schichten zumindest teilweise durch Tragstrukturen begrenzt sind. Die hauptsächlich metallisehen Tragstrukturen im Inneren des Wabenkörpers unterstützen einerseits eine elektrische Unterteilung des Wabenkörpers durch Spalte und tragen andererseits zur mechanischen Stabilität des Wabenkörpers bei. Durch relativ dicke, mechanisch stabile Tragstrukturen werden elektrische Kurzschlüsse oder mechanische Überbelastungen vermieden. Dabei können die Spalte so eng gehalten werden, daß sie die Funktion des Wabenkörpers nicht beeinträchtigen. Die Spalte können beispielsweise in einer ähnlichen Größenordnung liegen wie die Strukturhöhe der einzelnen Bleche bzw. der Abstand der Blechlagen.

Gemäß noch einem weiteren erfinderischen Aspekt wird ein katalytischer Konverter umfassend einen Trägerkörper mit einem elektrisch beheizbaren Wabenkörper vorgeschlagen, wobei stromabwärts des Trägerkörpers ein Hauptkatalysator, insbesondere ein 3-Wege-Katalysator, angeordnet ist Der Hauptkatalysator weist bevorzugt ein deutlich größeres Volumen auf als der elektrisch beheizbare Wabenkörper. Dieser Hauptkatalysator übernimmt nach der Kaltstartphase der Verbrennungskraftmaschine die katalytische Umsetzung der Schadstoffe im Abgas. Der elektrisch beheizbare Wabenkörper hat zu diesem Zeitpunkt seine Funktion erfüllt und kann daher von der Spannungsquelle getrennt werden.

Besonders vorteilhaft ist es dabei, daß der Trägerkörper mit einem elektrisch beheizbaren Wabenkörper gegen den Hauptkatalysator abgestützt ist. Somit kann der elektrisch beheizbare Wabenkörper selbst relativ filigran ausgeführt sein, wobei er dennoch den auftretenden Druckschwankungen im Abgasstrom standhält Vorzugsweise werden derartige Stützelemente über dem Querschnitt eines elektrisch beheizbaren Wabenkörpers gleichmäßig verteilt angeordnet, wobei sich diese zumindest teilweise in die Kanäle der Wabenkörper erstrecken. Insbesondere bei einer Ausführungsform des elektrisch beheizbaren Wabenkörpers mit einer relativ geringen axialen Gesamtlänge, läßt sich dieser auch zusammen mit dem Hauptkatalysator in einem gemeinsamen Mantelrohr integrieren, wobei das Mantelrohr als Stützelement dient.

Weitere Vorteile und besonders bevorzugte Ausgestaltungen des erfindungsgemäßen elektrisch beheizbaren Wabenkörpers werden anhand der nachfolgenden Zeichnungen beschrieben. Dabei zeigen:
- Fig. 1: eine schematische Darstellung einer Ausgestaltung des erfindungsgemäßen elektrisch beheizbaren Wabenkörpers,
- Fig. 2: eine schematische Darstellung der Temperaturverteilung über die axiale Länge des erfindungsgemäßen Wabenkörpers,
- Fig. 3: eine stirnseitige und schematische Ansicht einer weiteren Ausgestaltung des Wabenkörpers,
- Fig. 4: eine schematische Darstellung eines erfindungsgemäßen Wabenkörpers in einem Abgassystem,
- Fig. 5: eine schematische Detailansicht des erfindungsgemäßen Wabenkörpers in der ersten Zone und
- Fig. 6: eine schematische Detailansicht des erfindungsgemäßen Wabenkörpers in der zweiten Zone.

Figur 1 zeigt schematisch und perspektivisch eine Ausführungsform eines erfindungsgemäßen elektrisch beheizbaren Wabenkörpers 1 zur Reinigung eines Abgases einer Verbrennungskraftmaschine. Der elektrisch beheizbare Wabenkörper 1 hat zwei in Strömungsrichtung 8 hintereinander angeordnete Zonen 7 und 9, wobei die zwei Zonen 7 und 9 verschiedene Beschichtungen 10 und 11 (nicht dargestellt) aufweisen. Die erste Zone 7 hat dabei eine axiale 17 erste Länge 18, die vorzugsweise kleiner 20 mm ist. Der Wabenkörper 1 weist weiterhin Kanäle 3 auf, die während des Betriebes von dem Abgas in Strömungsrichtung 8 durchströmt werden.

Der Wabenkörper 1 ist von einem Mantelrohr 6 umschlossen, wodurch die Stabilität des Wabenkörpers 1 deutlich erhöht wird. Der Wabenkörper 1 ist elektrisch leitend mit einer Elektrode 4 verbunden. Mit Hilfe dieser Elektrode 4 und einer Spannungsquelle 23 wird bei Anlegung einer Spannung im Wabenkörper 1 ein vorgebbarer Strompfad 5 (nicht dargestellt) gebildet, der eine gleichmäßige Erwärmung des Wabenkörpers 1 gewährleistet.

Figur 2 zeigt schematisch die Temperaturverteilung im Inneren des Wabenkörpers 1 über die axiale 17 Gesamtlänge L des Wabenkörpers 1. der Wabenkörper 1 weist demnach eine in Strömungsrichtung 8 ansteigende Temperatur während der Kaltstartphase der Verbrennungskraftmaschine auf. Die erste Zone 7 hat demzufolge eine geringere Temperatur T als eine stromabwärts 8 angeordnete Zone 9. Die Kurve 24 zeigt hierbei beispielhaft einen im wesentlichen linearen Zusammenhang zwischen der Länge des Wabenkörpers 1 und der Temperatur T. Die Kurve 24 wird im starken Maße von dem "Aufnahme-Zeitpunkt" während der Kaltstartphase beeinflußt.

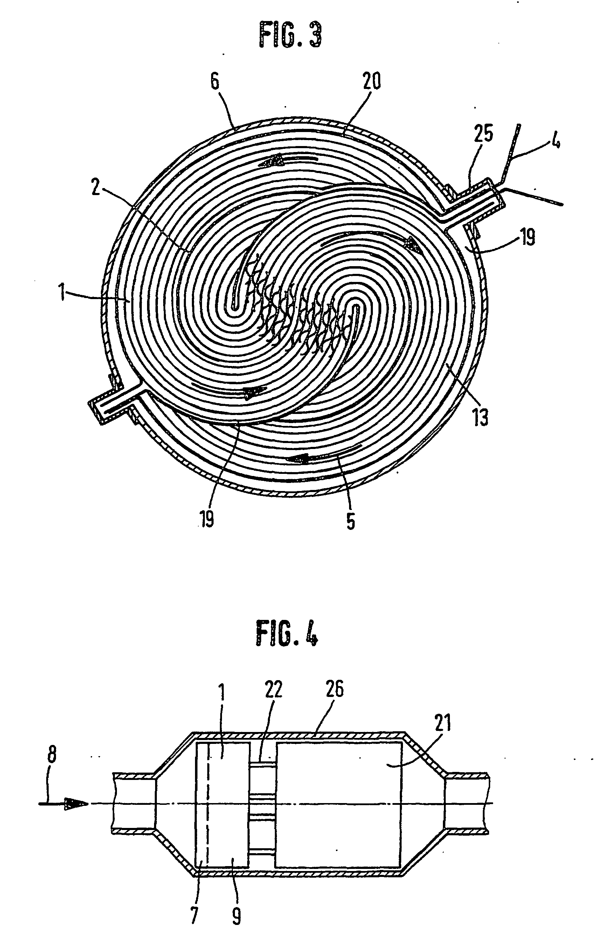

Figur 3 zeigt schematisch ein weiteres Ausführungsbeispiel eines erfindungsgemäßen Wabenkörpers 1. Der Wabenkörper 1 hat elektrisch isolierende Schichten 2 und zwei Elektroden 4, die derart elektrisch leitend mit dem Wabenkörper 1 verbunden sind, daß ein vorgebbarer Strompfad 5 (Pfeile) gebildet ist. Die Darstellung zeigt einen S-förmig gewundenen Strompfad 5. Der Wabenkörper 1 ist von einem Mantelrohr 6 umschlossen, wobei die Elektrode 4 elektrisch isoliert 25 durch das Mantelrohr 6 geführt ist. Die elektrischen Schichten 2 sind im wesentlichen durch Luftspalte 19 gebildet Zur Erhöhung der mechanischen Stabilität weist der Wabenkörper 1 zusätzlich Tragstrukturen 20 auf. Die Tragstrukturen 20 werden ebenfalls zur gleichmäßigen Einbringung eines elektrischen Stromes in die Blechlagen 13 genutzt

Figur 4 zeigt schematisch ein Abgassystem 26, in dem ein elektrisch beheizbarer Wabenkörper 1 mit einer ersten Zone 7 und einer zweiten Zone 9 sowie ein zusätzlicher Hauptkatalysator 21 angeordnet sind. Der Wabenkörper 1 sowie der Hauptkatalysator 21 werden von einem Abgas in einer Strömungsrichtung 8 durchströmt. Der Wabenkörper 1 ist mittels mehrerer Stützelemente 22 gegen den Hauptkatalysator 21 abgestützt, um eine dauerhafte Fixierung des Wabenkörpers 1 in dem Abgassystem 26 zu gewährleisten.

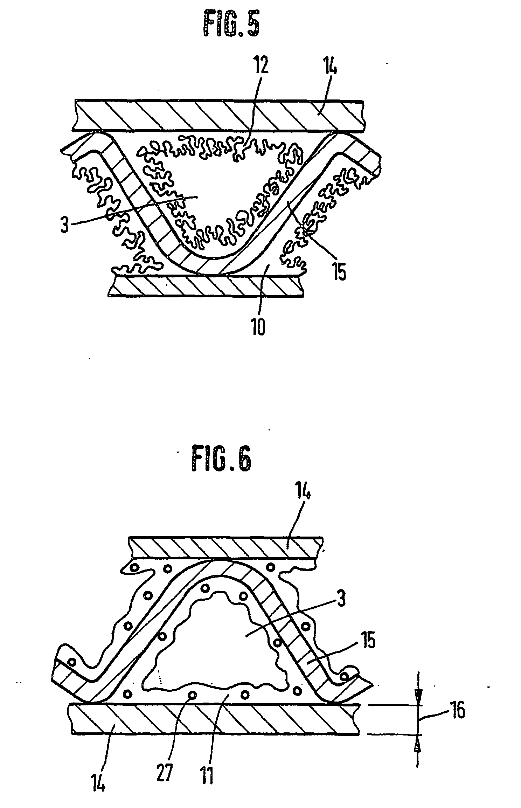

Figur 5 zeigt schematisch eine Detailansicht des elektrisch beheizbaren Wabenkörpers 1 in der ersten Zone 7. Der Wabenkörper 1 weist mehrere glatte 14 und gewellte Bleche 15 auf, die zumindest teilweise so strukturiert sind, daß diese für ein Abgas durchströmbar sind. Aufgrund der Stapelung von glatten 14 und gewellten Blechen 15 werden Kanäle 3 gebildet, durch die das Abgas strömt Die Bleche 14 und 15 weisen eine Beschichtung mit Absorbermaterial 10 auf, wobei das Adsorbermaterial 10 eine Zeolithstruktur 12 aufweist

Figur 6 zeigt schematisch in einer Detailansicht den Wabenkörper 1 in der zweiten Zone 9. Die glatten 14 und gewellten Bleche 15 begrenzen Kanäle 3. Die Bleche 14 und 15 haben eine Dicke 16 und weisen eine katalytisch, aktive Beschichtung 11 auf. Die katalytisch aktive Beschichtung 11 weist Edelmetalle 27 auf, welche insbesondere eine oxidierende Wirkung haben.

Der elektrisch beheizbare Wabenkörper dient insbesondere als Falle für im Abgas enthaltene Schadstoffe, vorzugsweise Kohlenwasserstoffe oder Stickoxide, wobei die Ausgestaltung der adsorbierenden ersten Zone auf das Anspringverhalten des elektrisch beheizbaren Wabenkörpers angepaßt ist Der erfindungsgemäße Wabenkörper verhindert somit auch eine Schadstoff-Emission in die Umgebung während der Kaltstartphase einer Vebrennungskraftmaschine.

### Bezugszeichenliste

- 1: Wabenkörper
- 2: Schicht
- 3: Kanal
- 4: Elektrode
- 5: Strompfad
- 6: Mantelrohr
- 7: erste Zone
- 8: Strömungsrichtung
- 9: zweite Zone
- 10: Adsorbermaterial
- 11: katalytisch aktive Beschichtung
- 12: Zeolithstruktur
- 13: Blechlage
- 14: glattes Blech
- 15: gewelltes Blech
- 16: Dicke
- 17: Achse
- 18: erste Länge
- 19: Luftspalt
- 20: Tragstruktur
- 21: Hauptkatalysator
- 22: Stützelement
- 23: Spannungsquelle
- 24: Kurve
- 25: Isolierung
- 26: Abgassystem
- 27: Edelmetall
- T: Temperatur
- L: Gesamtlänge

## Patentansprüche

1. Elektrisch beheizbarer Wabenkörper (1), insbesondere zur Reinigung eines Abgases einer Verbrennungskraftmaschine, mit mindestens zwei in Strömungsrichtung (8) hintereinander angeordneten Zonen (7, 9), **dadurch gekennzeichnet, daß** die mindestens zwei Zonen (7, 9) verschiedene Beschichtungen (10, 11) aufweisen.

2. Elektrisch beheizbarer Wabenkörper (1) nach Anspruch 1, **dadurch gekennzeichnet, daß** die erste Zone (7) eine Beschichtung mit Adsorbermaterial (10) und die zweite Zone (9) eine katalytisch aktive Beschichtung (11) aufweist.

3. Elektrisch beheizbarer Wabenkörper (1) nach Anspruch 2, **dadurch gekennzeichnet, daß** die Beschichtung mit Adsorbermaterial (11) eine Zeolithstruktur (12) aufweist.

4. Elektrisch beheizbarer Wabenkörper (1) nach einem der Ansprüche 1 bis 3, **dadurch gekennzeichnet, daß** der Wabenkörper (1) Blechlagen (13) aufweist, die zumindest teilweise so strukturiert sind, daß diese für das Abgas durchströmbar sind.

5. Elektrisch beheizbarer Wabenkörper (1) nach Anspruch 4, **dadurch gekennzeichnet, daß** die Blechlagen (13) mit Blechen (14,15) ausgeführt sind, die eine Dicke (16) von kleiner 0,08 mm haben.

6. Elektrisch beheizbarer Wabenkörper (1) nach einem der Ansprüche 1 bis 5, **dadurch gekennzeichnet, daß** der Wabenkörper (1) für ein Abgas durchströmbare Kanäle (3) aufweist, wobei die Anzahl von Kanälen (3) größer 400 cpsi, insbesondere größer 600 cpsi ist.

7. Elektrisch beheizbarer Wabenkörper (1) nach einem der Ansprüche 1 bis 6, **dadurch gekennzeichnet, daß** die erste Zone (7) eine axiale (17) erste Länge (18) von kleiner 20 mm ausweist

8. Trägerkörper mit einem elektrisch beheizbaren Wabenkörper (1) nach einem der Ansprüche 1 bis 7, **dadurch gekennzeichnet, daß** der Wabenkörper (1) elektrisch isolierende Schichten (2) aufweist und mit mindestens einer Elektrode (4) derart elektrisch leitend verbunden ist, daß ein vorgebbarer Strompfad (5) gebildet ist, wobei der Wabenkörper (1) von einem Mantelrohr (6) zumindest teilweise umschlossen ist.

9. Trägerkörper nach Anspruch 8, **dadurch gekennzeichnet, daß** die mindestens eine Elektrode (4) elektrisch isoliert (25) durch das Mantelrohr (6) geführt ist.

10. Trägerkörper nach Anspruch 8 oder 9, **dadurch gekennzeichnet, daß** die elektrisch isolierenden Schichten (2) zumindest teilweise Luftspalte (19) sind.

11. Trägerkörper nach einem der Ansprüche 8 bis 10, **dadurch gekennzeichnet, daß** die elektrisch isolierenden Schichten (2) zumindest teilweise durch Tragstrukturen (20) begrenzt sind.

12. Katalytischer Konverter umfassend einen Trägerkörper mit einem elektrisch beheizbaren Wabenkörper (1) nach einem der Ansprüche 1 bis 11, **dadurch gekennzeichnet, daß** stromabwärts (8) des Trägerkörpers ein Hauptkatalysator (21), insbesondere Drei-Wege-Katalysator, angeordnet ist.

13. Katalytischer Konverter nach Anspruch 12, **dadurch gekennzeichnet, daß** der Trägerkörper mit einem elektrisch beheizbaren Wabenkörper (1) gegen den Hauptkatalysator (21) abgestützt (22) ist.

## Claims

1. An electrically heatable honeycomb body (1), in particular for cleaning an exhaust gas from an internal combustion engine, having at least two zones (7, 9) which are arranged in series in the direction of flow (8), **characterized in that** the at least two zones (7, 9) have different coatings (10, 11).

2. The electrically heatable honeycomb body (1) as claimed in claim 1, **characterized in that** the first zone (7) has a coating comprising adsorbing material (10), and the second zone (9) has a catalytically active coating (11).

3. The electrically heatable honeycomb body (1) as claimed in claim 2, **characterized in that** the coating comprising adsorbing material (11) has a zeolite structure (12).

4. The electrically heatable honeycomb body (1) as claimed in one of claims 1 to 3, **characterized in that** the honeycomb body (1) has sheet-metal layers (13) which are at least in part structured in such a way that the exhaust gas can flow through them.

5. The electrically heatable honeycomb body (1) as claimed in claim 4, **characterized in that** the sheet-metal layers (13) are designed with metal sheets (14, 15) which have a thickness (16) of less than 0.08 mm.

6. The electrically heatable honeycomb body (1) as claimed in one of claims 1 to 5, **characterized in that** the honeycomb body (1) has channels (3) through which an exhaust gas can flow, the number of channels (3) being greater than 400 cpsi, in particular greater than 600 cpsi.

7. The electrically heatable honeycomb body (1) as claimed in one of claims 1 to 6, **characterized in that** the first zone (7) has an axial (17) first length (18) of less than 20 mm.

8. A support body having the electrically heatable honeycomb body (1) as claimed in one of claims 1 to 7, **characterized in that** the honeycomb body (1) has electrically insulating layers (2) and is connected in an electrically conductive manner to at least one electrode (4), in such a manner that a predeterminable current path (5) is formed, the honeycomb body (1) being at least partially surrounded by a tubular casing (6).

9. The support body as claimed in claim 8, **characterized in that** the at least one electrode (4) extends in an electrically insulated manner (25) through the tubular casing (6).

10. The support body as claimed in claim 8 or 9, **characterized in that** the electrically insulating layers (2) are at least in some cases air gaps (19).

11. The support body as claimed in one of claims 8 to 10, **characterized in that** the electrically insulating layers (2) are at least partially delimited by support structures (20).

12. A catalytic converter comprising a support body with an electrically heatable honeycomb body (1) as set forth in one of claims 1 to 11; **characterized in that** a main catalyst (21), in particular a three-way catalyst, is arranged downstream (8) of the support body.

13. The catalytic converter as claimed in claim 12, **characterized in that** the support body with an electrically heatable honeycomb body (1) is supported (22) against the main catalyst (21).

## Revendications

1. Corps en nids d'abeilles (1) pouvant être chauffé électriquement, notamment pour l'épuration d'un gaz d'échappement d'une machine à combustion interne, avec au moins deux zones (7, 9) agencées l'une derrière l'autre dans le sens de l'écoulement (8), **caractérisé en ce que** les au moins deux zones (7, 9) ont des revêtements (10, 11) différents.

2. Corps en nids d'abeilles (1) pouvant être chauffé électriquement selon la revendication 1, **caractérisé en ce que** la première zone (7) a un revêtement avec du matériau adsorbant (10) et la deuxième zone (9) un revêtement à activité catalytique (11).

3. Corps en nids d'abeilles (1) pouvant être chauffé électriquement selon la revendication 2, **caractérisé en ce que** le revêtement avec le matériau adsorbant (11) a une structure de zéolithe (12).

4. Corps en nids d'abeilles (1) pouvant être chauffé électriquement selon l'une des revendications 1 à 3, **caractérisé en ce que** le corps en nids d'abeilles (1) a des couches de tôle (13) qui sont structurées au moins partiellement de telle façon qu'elles peuvent être parcourues par le gaz d'échappement.

5. Corps en nids d'abeilles (1) pouvant être chauffé électriquement selon la revendication 4, **caractérisé en ce que** les couches de tôle (13) sont réalisées avec des tôles (14, 15) qui ont une épaisseur (16) qui est plus petite que 0,08 mm.

6. Corps en nids d'abeilles (1) pouvant être chauffé électriquement selon l'une des revendications 1 à 5, **caractérisé en ce que** le corps en nids d'abeilles (1) présente des canaux (3) pouvant être parcourus par un gaz d'échappement, le nombre de canaux (3) étant plus grand que 400 cpsi, notamment plus grand que 600 cpsi.

7. Corps en nids d'abeilles (1) pouvant être chauffé électriquement selon l'une des revendications 1 à 6, **caractérisé en ce que** la première zone (7) a une première longueur (18) axiale (17) qui est plus petite que 20 mm.

8. Corps support avec un corps en nids d'abeilles (1) pouvant être chauffé électriquement selon l'une des revendications 1 à 7, **caractérisé en ce que** le corps en nids d'abeilles (1) a des couches électriquement isolantes (2) et est relié de telle manière à au moins une électrode (4) de façon à être électroconducteur qu'un circuit de courant prédéterminé (5) est formé, le corps en nids d'abeilles (1) étant entouré au moins partiellement par un tube d'enveloppe (6).

9. Corps support selon la revendication 8, **caractérisé en ce que** l'au moins une électrode (4) est guidée à travers le tube d'enveloppe (6) en étant isolée électriquement (25).

10. Corps support selon la revendication 8 ou 9, **caractérisé en ce que** les couches électriquement isolantes (2) sont au moins partiellement des fentes d'air (19).

11. Corps support selon l'une des revendications 8 à 10, **caractérisé en ce que** les couches électriquement isolantes (2) sont limitées au moins partiellement par des structures porteuses (20).

12. Convertisseur catalytique comprenant un corps support avec un corps en nids d'abeilles (1) pouvant être chauffé électriquement selon l'une des revendications 1 à 11, **caractérisé en ce qu'**un catalyseur principal (21), notamment un catalyseur à trois voies, est agencé en aval (8) du corps support.

13. Convertisseur catalytique selon la revendication 12, **caractérisé en ce que** le corps support est supporté (22) contre le catalyseur principal (21) avec un corps en nids d'abeilles (1) pouvant être chauffé électriquement.
